(19) **Europäisches Patentamt / European Patent Office / Office européen des brevets**

(11) **EP 3 836 032 A1**

(12) **EUROPEAN PATENT APPLICATION**
published in accordance with Art. 153(4) EPC

(43) Date of publication:
16.06.2021 Bulletin 2021/24

(21) Application number: 18934300.7

(22) Date of filing: 21.09.2018

(51) Int Cl.:
*G06N 3/08* (2006.01)    *G06K 9/62* (2006.01)

(86) International application number:
PCT/CN2018/106919

(87) International publication number:
WO 2020/056718 (26.03.2020 Gazette 2020/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(71) Applicant: HUAWEI TECHNOLOGIES CO., LTD.
Shenzhen, Guangdong 518129 (CN)

(72) Inventors:
• LIAN, Shuo
 Shenzhen, Guangdong 518129 (CN)
• CHEN, Jingwei
 Shenzhen, Guangdong 518129 (CN)

(74) Representative: Maiwald Patent- und
Rechtsanwaltsgesellschaft mbH
Elisenhof
Elisenstraße 3
80335 München (DE)

(54) **QUANTIZATION METHOD AND APPARATUS FOR NEURAL NETWORK MODEL IN DEVICE**

(57) A method and an apparatus for quantizing a neural network model in a device is provided. User calibration data is obtained and input into the neural network model to calculate a quantization parameter of each of a plurality of layers of the neural network model, to-be-quantized data is input into the neural network model to quantize input data of each layer by using the quantization parameter of each layer. Because the user calibration data is generated based on data generated by the device used by a user, the quantization parameter can be obtained online, and the quantization parameter matches user data in the device, thereby improving quantization accuracy.

```
┌─────────────────────────────────────────┐
│ Obtain user calibration data, where the  │── S501
│ user calibration data is generated based │
│ on data generated by a terminal          │
│ device used by a user                    │
└─────────────────────────────────────────┘
                   │
                   ▼
┌─────────────────────────────────────────┐
│ Input the user calibration data into a   │── S502
│ neural network model and calculate a     │
│ quantization parameter of each of        │
│ a plurality of layers of the neural      │
│ network model                            │
└─────────────────────────────────────────┘
                   │
                   ▼
┌─────────────────────────────────────────┐
│ Input to-be-quantized data into the      │── S503
│ neural network model to quantize input   │
│ data of each layer by using the          │
│ quantization parameter of each layer     │
└─────────────────────────────────────────┘
```

FIG. 5

EP 3 836 032 A1

**Description**

**TECHNICAL FIELD**

This application relates to neural network technologies, and in particular, to a method and an apparatus for quantizing a neural network model in a device.

**BACKGROUND**

An artificial neural network (artificial neural networks, ANN), also briefly referred to as a neural network (neural network, NN), is a network structure that imitates behavioral characteristics of animal neural networks for information processing. This structure is formed by interconnecting a large quantity of nodes (or referred to as neurons), and achieves the purpose of processing information by learning and training input information based on a specific operation model. A neural network includes an input layer, a hidden layer and an output layer. The input layer is responsible for receiving input signals, the output layer is responsible for outputting calculation results of the neural network, and the hidden layer is responsible for calculation processes such as learning and training. The hidden layer is a memory unit of the network and a memory function of the hidden layer is represented by a weight matrix. Each neuron generally corresponds to one piece of weight data.

A neural network model is a description of the neural network based on a mathematical model. Quantization of the neural network model refers to conversion of parameters in the neural network model from high-precision data to low-precision data so that a size of the neural network model becomes smaller, a running speed becomes higher, and accuracy is similar to that before quantization. The quantization of the neural network model includes two stages: quantization of weight data and quantization of input data. Commonly used quantization techniques include INT8 quantization. The INT8 quantization means that the weight data (such as double-precision (64-bit), single-precision (32-bit), or half-precision (16-bit)) and the input data (double-precision, single-precision, or half-precision) stored in the neural network model are mapped to 8-bit quantized data through linear or nonlinear methods. The process of quantizing the weight data is performed layer by layer. Before quantization, a weight quantization parameter of each layer in the neural network needs to be obtained, and the weight data is quantized based on the weight quantization parameter to obtain quantized weight data of each layer. After that, quantization of the input data can be further performed, and the process is performed using an input quantization parameter. To obtain the weight quantization parameter and the input quantization parameter, a device manufacturer or a model provider can input a set of preset calibration data into a weight-quantized neural network model, so as to derive the weight quantization parameter and the input quantization parameter.

However, the foregoing input quantization parameters are all generated and provided offline by the device manufacturer or the model provider based on the preset calibration data, that is, the device manufacturer or the model provider loads the quantized neural network model including the input quantization parameter onto various types of devices, such as terminal devices. Because common preset calibration data is used in the process of obtaining the input quantization parameter offline, it is clearly that the common calibration data does not match data generated by a user, increasing a quantization error of the neural network model and reducing accuracy of the neural network model.

**SUMMARY**

This application provides a method and an apparatus for quantizing a neural network model in a device, so as to obtain a quantization parameter on the device online, thereby improving quantization accuracy.

A first aspect of this application provides a method for quantizing a neural network model in a device, including: obtaining user calibration data, where the user calibration data is generated based on data generated by the device used by a user; inputting the user calibration data into the neural network model to calculate a quantization parameter of each of a plurality of layers of the neural network model; and inputting to-be-quantized data into the neural network model to quantize input data of each layer by using the quantization parameter of each layer.

In the method, the user calibration data is used to calculate the quantization parameter of each layer. Because the user calibration data is generated based on the data generated by the device used by the user, the quantization parameter can be obtained online, and the quantization parameter matches the user data in the device, thereby improving quantization accuracy.

Optionally, obtaining user calibration data may include generating the user calibration data. For example, the user calibration data may be generated based on the data generated by the device used by the user.

In an example manner, obtaining the user calibration data and calculating the quantization parameter are performed at a quantization parameter calculation stage; and quantizing input data of each layer is performed at a quantization stage. Optionally, the quantization parameter calculation stage may be triggered periodically or when there is no quantization task.

In an example manner, the user calibration data includes at least one of first audio data or first image data; and the to-be-quantized data includes at least one of second audio data or second image data.

In an example manner, the user calibration data is obtained by screening or tailoring the data generated by the device used by the user. For example, the generating the user calibration data includes generating the user calibration data by screening or tailoring the data generated by the device used by the user.

In an example manner, the quantization parameter includes a quantization scale value $scale_{data}$.

In another example manner, the quantization parameter further includes a quantization offset value *offset.*

In an example manner, calculating a quantization parameter of any layer includes: determining a maximum value in input data of the layer; and calculating a quantization scale value of the layer by using the following formula:

$$scale_{data} = \frac{data_{max}}{2^{x-1} - 1},$$

where $data_{max}$ represents the maximum value in the input data of the layer, and *x* represents a quantity of quantized bits.

In another example manner, calculating a quantization parameter of any layer includes: determining a maximum value and a minimum value in input data of the layer; and calculating a quantization scale value and a quantization offset value of the layer by using the following formulas: $$scale_{data} = \frac{data_{max} - data_{min}}{2^{x} - 1}$$ and $$offset = round\left(\frac{data_{min}}{scale_{data}}\right),$$

where $data_{max}$ represents the maximum value in the input data of the layer, $data_{min}$ represents the minimum value in the input data of the layer, and *x* represents a quantity of quantized bits.

In another example manner, before determining the maximum value in input data of the layer, the method further includes: replacing a value greater than a quantization threshold in the input data of the layer with the quantization threshold.

A second aspect of this application provides an apparatus for quantizing a neural network model in a device, including: an obtaining module, configured to obtain user calibration data, where the user calibration data is generated based on data generated by the device used by a user; a calculation module, configured to input the user calibration data into the neural network model to calculate a quantization parameter of each of a plurality of layers of the neural network model; and a quantization module, configured to input to-be-quantized data into the neural network model to quantize input data of each layer by using the quantization parameter of each layer. Optionally, obtaining user calibration data may include generating the user calibration data. For example, the user calibration data may be generated based on the data generated by the device used by the user.

In an example manner, obtaining the user calibration data and calculating the quantization parameter are performed at a quantization parameter calculation stage; and quantizing input data of each layer is performed at a quantization stage. Optionally, the quantization parameter calculation stage may be triggered periodically or when there is no quantization task.

In an example manner, the data generated by the device used by the user includes at least one of first audio data or first image data; and the to-be-quantized data includes at least one of second audio data or second image data.

In an example manner, the user calibration data is obtained by screening or tailoring the data generated by the device used by the user. For example, the generating the user calibration data includes generating the user calibration data by screening or tailoring the data generated by the device used by the user.

In an example manner, the quantization parameter includes a quantization scale value $scale_{data}$.

In another example manner, the quantization parameter further includes a quantization offset value *offset.*

In an example manner, when calculating a quantization parameter of any layer, the calculation module is configured to: determine a maximum value in input data of the layer; and calculate a quantization scale value of the layer by using the following formula: $$scale_{data} = \frac{data_{max}}{2^{x-1} - 1},$$ where $data_{max}$ represents the maximum value in the input data of the layer, and *x* represents a quantity of quantized bits.

In another example manner, when calculating a quantization parameter of any layer, the calculation module is configured to: determine a maximum value and a minimum value in input data of the layer; and calculate a quantization scale value and a quantization offset value of the layer by using the following formulas: $$scale_{data} = \frac{data_{max} - data_{min}}{2^{x} - 1}$$

and $$offset = round\left(\frac{data_{min}}{scale_{data}}\right),$$ where $data_{max}$ represents the maximum value in the input data of the layer, $data_{min}$

represents the minimum value in the input data of the layer, and $x$ represents a quantity of quantized bits.

In another example manner, the calculation module is further configured to: before determining the maximum value in input data of the layer, replace a value greater than a quantization threshold in the input data of the layer with the quantization threshold.

Optionally, each of the foregoing modules may be a hardware dedicated circuit, a software program module, or a combination of the two.

A third aspect of this application provides a device, including a processor and a memory, where the memory is configured to store an instruction, and the processor is configured to execute the instruction stored in the memory, so that the device performs the method according to the first aspect of this application.

A fourth aspect of this application provides a computer-readable storage medium, where the computer-readable storage medium stores an instruction, and when the instruction is executed by a computer or a processor, the computer or the processor is enabled to perform the method according to the first aspect of this application.

A fifth aspect of this application provides a computer program product, where when the computer program product is executed by a computer or a processor, the computer or the processor is enabled to perform the method according to the first aspect of this application.

A sixth aspect of this application provides a device, including a processor, and at least one of an image component and an audio component, where the image component and the audio component are configured to generate the data when a user uses the device, so that the processor is configured to perform the method according to the first aspect of this application.

According to the method and apparatus for quantizing a neural network model in a device provided in this application, the user calibration data is obtained and input into the neural network model to calculate the quantization parameter of each of the plurality of layers of the neural network model, and the to-be-quantized data is input into the neural network model to quantize the input data of each layer by using the quantization parameter of each layer. Because the user calibration data is generated based on the data generated by the device used by the user, the quantization parameter can be obtained online, and the quantization parameter matches the user data in the device, thereby improving quantization accuracy.

## BRIEF DESCRIPTION OF DRAWINGS

FIG. 1 is a schematic diagram of a principle of a neural network model;
FIG. 2 is a specific implementation scenario of a neural network according to an embodiment of this application;
FIG. 3 is a specific implementation scenario of another neural network according to an embodiment of this application;
FIG. 4 is a schematic structural diagram of a quantization device;
FIG. 5 is a flowchart of a method for quantizing a neural network model in a device according to a first embodiment of this application; and
FIG. 6 is a schematic structural diagram of an apparatus for quantizing a neural network model in a device according to a second embodiment of this application.

## DESCRIPTION OF EMBODIMENTS

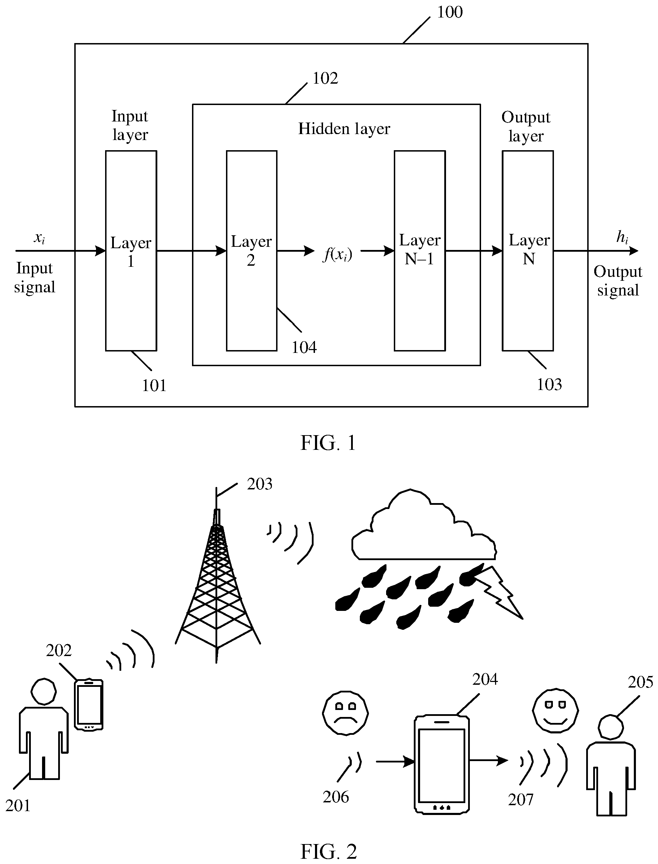

In the embodiments, a neural network is a network structure that imitates behavioral characteristics of an animal neural network for information processing, and can be implemented by software, hardware, or a combination thereof. The structure of the neural network can be represented by a neural network model, and therefore the neural network model is also briefly referred to as a neural network. A neural network model refers to programs and data that are obtained through training based on a large amount of data and that are used to perform neural network calculation, such as cognitive calculation. FIG. 1 is a schematic diagram of a principle of a neural network model. As shown in FIG. 1, a neural network 100 has N processing layers, where $N \geq 3$ and N is a natural number. A first layer of the neural network is an input layer 101, which is responsible for receiving an input signal (or referred to as input data). A last layer of the neural network is an output layer 103, which outputs a processing result of the neural network. Other layers except the first layer and the last layer are intermediate layers 104, which jointly form a hidden layer 102. Each intermediate layer in the hidden layer can receive an input signal of the layer, and can also output a signal. The hidden layer is responsible for processing the input signal of the layer. Each layer represents a logic level of signal processing. Through a plurality of layers, a data signal can be processed by a plurality of levels of logic.

For ease of understanding, the following describes a processing principle of the neural network in the embodiments of this application. For example, the processing of the neural network is a non-linear function $f(x_i)$, for example, $f(x_i) = \max(0, x_i)$. In some feasible embodiments, the processing function may be an activation function (Rectified Linear Units, ReLU), a hyperbolic tangent function (tanh), a sigmoid function (sigmoid), or the like. It is assumed that $(x_1,x_2,x_3)$ represents a one-dimensional input signal matrix, each x represents one piece of input data of the layer, $(h_1,h_2,h_3)$ represents an output signal matrix, $w_{ij}$ represents weight data between input $x_j$ and output $h_i$, and a matrix formed by the weight data is a weight matrix. Then, a weight matrix $W$ corresponding to the one-dimensional input signal matrix and the output signal matrix is shown in equation (1):

$$W = \begin{pmatrix} W_{11} & W_{12} & W_{13} \\ W_{21} & W_{22} & W_{23} \\ W_{31} & W_{32} & W_{33} \end{pmatrix} \tag{1}$$

A relationship between the input signal and the output signal is shown in equation (2), where $b_i$ represents a bias value of the processing function of the neural network. The bias value is used to adjust input of the neural network to obtain an ideal output result.

$$h_1 = f\left(W_{11} x_1 + W_{12} x_2 + W_{13} x_3 + b_1\right)$$
$$h_2 = f\left(W_{21} x_1 + W_{22} x_2 + W_{23} x_3 + b_2\right) \tag{2}$$
$$h_3 = f\left(W_{31} x_1 + W_{32} x_2 + W_{33} x_3 + b_3\right)$$

The hidden layer is a memory unit of the neural network model and a memory function of the hidden layer is represented by a weight matrix. Each neuron generally corresponds to one piece of weight data. The weight matrix is usually large. Therefore, the weight matrix needs to be quantized, that is, a plurality of pieces of weight data are quantized. The quantization can be performed by using a weight quantization parameter. In addition to the quantization of the weight matrix of each layer, the quantization of the neural network model further includes quantization of the input data of each layer. The input data of each layer is quantized by using an input quantization parameter.

The weight quantization parameter and the input quantization parameter are floating point numbers. The weight quantization parameter of each layer is used to quantize the weight matrix of the layer to obtain quantized weight data. The weight quantization parameter of each layer is calculated independently. Therefore, the weight quantization parameters of various layers may be the same or different. The input quantization parameter of each layer is used to quantize the input data of the layer. The input quantization parameter of each layer is calculated independently. Therefore, the input quantization parameters of various layers may be the same or different. The weight matrix and the input data of each layer of the neural network model are quantized, so that a size of the neural network model becomes smaller, a running speed becomes higher, and accuracy is similar to that before quantization.

A neural network model includes quantized weight data, a weight quantization parameter, and an input quantization parameter. After the device manufacturer or the model provider generates weight data and a weight quantization parameter, the weight data and the weight quantization parameter are set in a device. The input quantization parameter can also be set in the device by the device manufacturer or the model provider, and can be updated in subsequent launching or use of the device.

Because an existing process of obtaining an input quantization parameter is completed by the device manufacturer or the model provider offline, a quantization error is relatively large. To resolve the foregoing problem, this application provides a method for quantizing a neural network model. In this quantization method, an input quantization parameter is obtained online, thereby improving accuracy of quantizing the neural network model. It should be understood that in this application, the input quantization parameter used to quantize each layer is also briefly referred to as a quantization parameter. In subsequent embodiments, a quantization parameter is used to represent an input quantization parameter for quantizing input data of any layer. The quantization parameter may be different from the weight quantization parameter, and is obtained online. Compared with the offline obtaining of the quantization parameter, the device manufacturer or the model provider does not need to set the quantization parameter, and the device does not need to be returned to a factory, so that a device that has been used by a user can independently obtain the quantization parameter. The quantization parameter can match the user's usage habits and common data, helping improve quantization accuracy.

In some feasible embodiments, the input data of the neural network model may be various forms of data such as audio data (or referred to as voice data), text data, image data, and temperature data. For example, the audio data may be voice data recorded by a recording device, voice data received by a mobile phone or a fixed phone during a call, or voice data sent by a radio station and received by a radio. The text data may be TXT text data, Word text data, PDF text data, or the like. The image data may be a landscape image shot by a camera, image data of a community environment captured by a monitoring device, facial data of a human face obtained by an access control system, or the like. The input signals of the neural network include other engineering signals that can be processed by various computers, which are not listed herein one by one. The processing performed by the hidden layer 102 of the neural network may be processing such as removing a noise signal mixed in the audio data to enhance the audio data, understanding specific content in the text data, and recognizing facial image data of a human face. The input data of the neural network model can be sequentially processed by a plurality of layers, and input data of each layer is processed output data of a previous layer. Therefore, each layer has its own input data, and only the input data of the first layer (the input layer) is the input data of the neural network model. The input data of the remaining layers is the output data of the neural network model processed by at least one previous layer, that is, the processing result of the at least one layer.

An embodiment of this application provides a specific implementation scenario of the neural network model 100. As shown in FIG. 2, a mobile smartphone client 201 initiates a voice call to a mobile smartphone client 205, and a voice signal is sent by a smartphone 202 and forwarded to a smartphone 204 via a base station 203. An input signal 206 is severely weakened and contains strong noise due to heavy rain and strong lightning and thunder when the voice call is initiated. The input signal may be a one-dimensional digital voice signal. The smartphone 204 is equipped with a neural network model 100. The neural network can be implemented in a chip in a form of a dedicated circuit, or may be a program instruction running in a central processing unit (Central Processing Unit, CPU) or another processor. The input signal 206 is processed in the neural network model in the smartphone 204. The processing includes noise removal and enhancement of effective signals, and the like, to obtain an output signal 207. The output signal retains complete voice information transmitted by the calling user, thereby avoiding interference of a harsh natural environment on the signal.

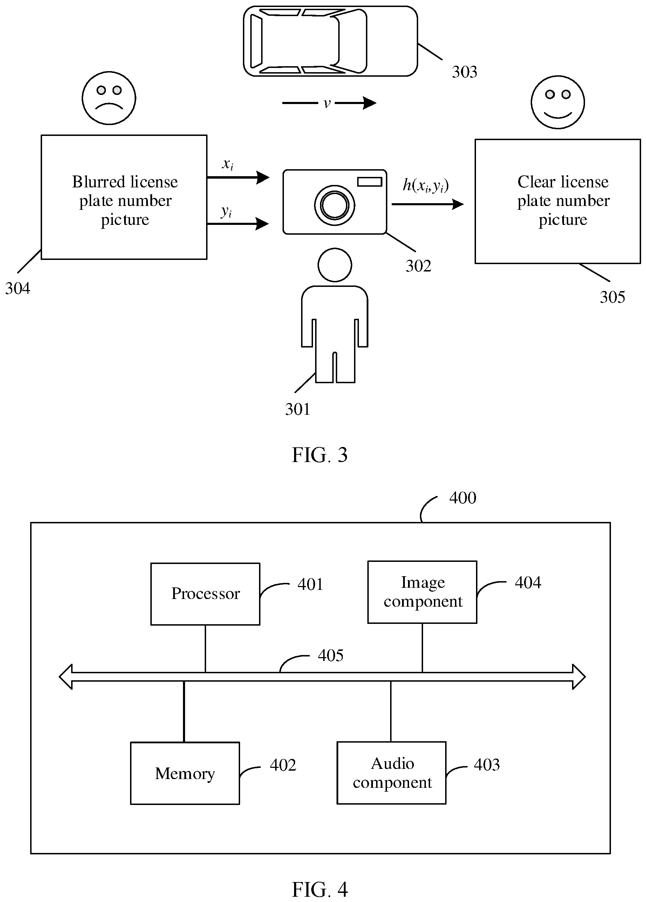

An embodiment of this application provides another specific implementation scenario of the neural network model 100. As shown in FIG. 3, a car 303 is driving at a high velocity, and a passer-by 301 uses a digital camera 302 to photograph a license plate number of the car 303. However, because the car 303 has a relatively high driving velocity v, a motion blur phenomenon occurs on an input signal 304 of the digital camera. The input signal is a two-dimensional digital image signal. The digital camera 302 is equipped with a neural network 100, and the neural network can be implemented in a chip in a form of a dedicated circuit, or may be a software module running in an image signal processor. After the input signal 304 is processed in the neural network in the digital camera 302, where the processing includes car motion model estimation, motion blur removal, and the like, an output signal 305 is obtained. Resolution of the license plate number information included in the output signal is improved, and accurate identification can be implemented.

The method provided in the embodiments of this application can be performed by a quantization device. The quantization device may be the foregoing terminal device, or may be a server or a network device. The terminal device is also referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless sending/receiving function, a virtual reality (Virtual Reality, VR) terminal device, an augmented reality (Augmented Reality, AR) terminal device, a wireless terminal in industrial control (industrial control), a wireless terminal in a self-driving (self driving) car, a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

FIG. 4 is a schematic structural diagram of a quantization device. As shown in FIG. 4, the quantization device 400 includes: a processor 401, a memory 402, an audio component 403, and an image component 404. The memory 402, the audio component 403, and the image component 404 are connected to and communicate with the processor 401 by using a bus 405.

The memory 402 is configured to store various types of data. For example, the data includes any application program or method instruction operating on the device 400, contact data, address book data, a message, a picture, a video, and the like. The memory 402 further includes a neural network model and input data to be input into the neural network model. For example, the memory 402 includes a weight quantization parameter in the neural network model, a quantized weight matrix (that is, quantized weight data), and an input quantization parameter. The memory 402 may be implemented by any type of volatile storage device, any type of non-volatile storage device, or a combination thereof, such as a static random access memory (Static Random-Access Memory, SRAM), an electrically erasable programmable read-only memory (Electrically Erasable Programmable read only memory, EEPROM), an erasable programmable read-only memory (Erasable Programmable Read Only Memory, EPROM), a programmable read-only memory (Programmable Read-Only Memory, PROM), a read-only memory (Read-Only Memory, ROM), a magnetic memory, a flash memory, a magnetic disk, or an optical disc.

The processor 401 is configured to execute data stored in the memory 402 to implement the function of the neural network 100 shown in FIG. 1. The processor 401 can further selectively control overall operations of the quantization device 400, such as display, telephone calls, data communication, camera operations, and recording operations. In this embodiment of this application, the processor 401 is configured to perform a method for quantizing a neural network model in a device described in the following embodiments. The processor 401 may be or include a central processing unit (Central Processing Unit, CPU), a general-purpose processor, a digital signal processor (Digital Signal Processor, DSP), a neural processing unit (Neural Processing Unit, NPU), and a graphics processing unit (Graphics Processing Unit, GPU). The processor 401 may further include: an application-specific integrated circuit (Application Specific Integrated Circuit, ASIC); a field programmable gate array (Field-Programmable Gate Array, FPGA), another programmable logic device, a transistor logic device, or the like; a hardware component; or a neural network processing unit formed by any combination thereof.

Therefore, the neural network 100 described in this embodiment can be implemented by the processor 401 in FIG. 4 by executing a software program related to the neural network in the memory 402. Therefore, the neural network 100 can be considered to be implemented mainly in a form of software. Alternatively, the neural network 100 can be implemented by a dedicated neural network hardware circuit, that is, the implementation of the processor 401, the memory 402, and the corresponding software program is replaced by hardware implementation. Alternatively, the neural network 100 can be implemented in a combination of software and hardware. Therefore, this embodiment does not limit how to implement the neural network 100 in the quantization device.

The bus 405 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus 405 may be classified into an address bus, a data bus, a control bus, and the like. For ease of representation, the bus 405 in the accompanying drawings of this application is not limited to only one bus or only one type of bus.

The audio component 403 may include an audio codec device or an audio enhancement device and is configured to form audio data; the audio component 403 may further include an audio data input/output device, such as a sensor. For example, the audio component 403 further includes a microphone in addition to the audio codec device or the audio enhancement device.

The image component 404 may include an image sensor and an image signal processor (ISP). The image sensor is configured to collect an image signal, and the image signal processor is configured to form image data based on the image signal collected by the image sensor; the image component 404 may alternatively be a video component for collecting a video, where the video includes a series of image data.

The structure of the quantization device shown in FIG. 4 is only an example for illustration. The quantization device may further include more components, for example, may further include a transceiver for wireless communication for sending and receiving wireless data. This is not limited in this embodiment.

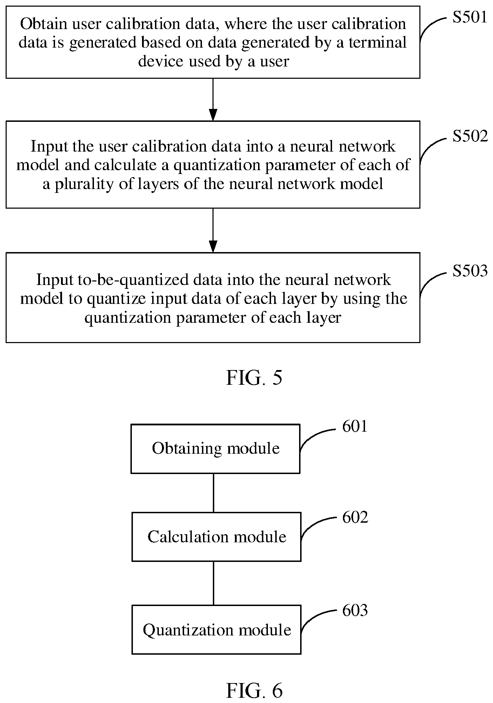

For ease of understanding, the following describes a specific quantization method in an embodiment of this application. FIG. 5 is a flowchart of a method for quantizing a neural network model in a device according to a first embodiment of this application. The method in this embodiment can be performed by the processor 401 in the quantization device 400 shown in FIG. 4, or alternatively can be performed by dedicated hardware, such as a dedicated logic circuit. The following method embodiment is described by using an example in which the related method is performed by the processor 401 in FIG. 4. As shown in FIG. 5, the method provided in this embodiment includes the following steps:

Step S501: Obtain user calibration data, where the user calibration data is generated based on data generated by a terminal device use by a user. The data generated by the quantization device used by the user may include different types of data. For example, the data generated by the quantization device used by the user includes at least one of audio data or image data, for example, the data is generated by an audio component 403 or an image component 404. The data generated by the quantization device used by the user may include some useless data. The quantization device can screen or tailor the data generated by the quantization device used by the user, to obtain the user calibration data. For example, the image data generated by the quantization device used by the user is tailored to a preset size to obtain first image data, and the audio data generated by the quantization device used by the user is tailored to preset duration to obtain first audio data. Alternatively, redundant data in the data generated by the quantization device is removed to obtain the user calibration data.

Alternatively, the user calibration data may be a part of the data generated by the quantization device, or a variant of the data generated by the quantization device. For example, the data generated by the terminal device may be generated by the processor by running a user-specified service or another service, or may be generated by a component other than the processor, such as the audio component or the image component described above. The audio component may be an audio codec device or an audio enhancement device and is configured to form audio data. The image component may be an image signal processor (ISP), which is configured to form image data based on an image signal collected by an image sensor; the image component may alternatively be a video component for collecting a video, where the video includes a series of image data. The image data and the audio data can be used as user data to obtain the user calibration data after further screening.

Optionally, the user calibration data not only can be obtained based on the data generated by the device used by the user, but also may include a part of common preset calibration data. The common preset calibration data is data used by a device manufacturer or a model provider when calculating a quantization parameter of each layer of the neural network model.

In this embodiment of the present invention, obtaining user calibration data includes generating the user calibration data. For example, an audio component, a video component, another component, or the processor 401 itself can generate the user calibration data, so that the processor 401 uses the user calibration data to generate a quantization parameter. For example, an audio component, a video component, another component, or the processor 401 can generate data when the device is used by the user, where the data is referred to as data generated by the device used by the user. The audio component, the video component, the another component, or the processor 401 can further process the data generated by the device used by the user, such as screening or tailoring, to obtain the user calibration data.

Alternatively, the data generated by the device used by the user can be stored in a memory, such as a memory 402, and be invoked by the audio component, the video component, the another component, or the processor 401 when a quantization parameter needs to be calculated, to generate the user calibration data. Alternatively, the user calibration data may be stored in the memory, so that the processor 401 invokes the user calibration data in a subsequent process of calculating the quantization parameter.

Step S502: Input the user calibration data into the neural network model, and calculate a quantization parameter (also referred to as an input quantization parameter) of each of a plurality of layers of the neural network model. The neural network model can be obtained through training by the device manufacturer or the model provider. The neural network model is preset in the quantization device when the quantization device is delivered. Alternatively, during use of the quantization device, the quantization device remotely downloads the neural network model from the device manufacturer or the model provider, and saves the neural network model. When quantization is needed, the quantization device reads the neural network model from the memory. Each layer of the neural network model obtained through training by the device manufacturer or the model provider may further have initial quantization parameters, and the initial quantization parameters include a weight quantization parameter and an initial input quantization parameter. The quantization parameter generated in the method of this embodiment can be used to replace the initial input quantization parameter. Therefore, the user calibration data is equivalent to an updated quantization parameter that is obtained by calibrating the initial input quantization parameter, and the quantization parameter better matches actual use requirements of the user.

In this embodiment, the quantization parameter includes a quantization scale value $scale_{data}$, or includes a quantization scale value $scale_{data}$ and a quantization offset value *offset*. Correspondingly, the quantization method can be divided into a quantization method without an offset and a quantization method with an offset. Optionally, the quantization method without an offset is subdivided into a quantization method with saturation and without an offset, and a quantization method without saturation and without an offset. Similarly, the quantization method with an offset is subdivided into a quantization method with saturation and with an offset, and a quantization method without saturation and with an offset.

For example, when the quantization method without saturation and without an offset is used, calculating a quantization parameter of any layer includes: first determining a maximum value in input data of the layer; and then calculating a quantization scale value of the layer by using the following formula 1:

$$scale_{data} = \frac{data_{max}}{2^{x-1} - 1} \qquad \text{(Formula 1)}$$

where, $data_{max}$ represents the maximum value in the input data of the layer, and *x* represents a quantity of quantized bits, indicating a quantity of bits of the quantized input data, for example, a value of *x* in INT8 quantization is 8, indicating that the quantity of bits of the quantized input data is 8, and the value of *x* in INT4 quantization is 4; and $scale_{data}$ represents a floating point number, which may be a 32-bit (bit), 64-bit, or 16-bit floating point number. For the quantization without an offset, a representation domain of INTx needs to be symmetric (that is, a quantity of negative numbers is equal to a quantity of positive numbers). Therefore, the representation domain of INTx is changed from $[-(2^{x-1}), (2^{x-1}-1)]$ to $[-(2^{x-1}-1), (2^{x-1}-1)]$. Correspondingly, for the INT8 quantization, a floating point number needs to be quantized into an 8-bit integer, and a data range of the INT8 quantization is [-127, 127]. For the INT4 quantization, a floating point number needs to be quantized into a 4-bit integer, and a data range of the INT4 quantization is [-15, 15]. The following uses the INT8 quantization as an example for description.

The input data of the layer may be a matrix, each piece of data in the matrix is an 8-bit, 32-bit, or 64-bit floating point number, and the input data of the layer is the output data of the previous layer. Optionally, when the output data of each layer is calculated, a quantization parameter of the layer calculated by the quantization device can be used to quantize the input data of the layer to obtain first quantized input data, and calculate the output data of the layer; or an initial quantization parameter of the neural network model can be used to quantize the input data of the layer to obtain second quantized input data, and calculate the output data of the layer. The initial quantization parameter is obtained through training by the device manufacturer or the model provider.

It is assumed that the input data of the layer is a 3x3 matrix data_cali_01:

data_cali_01=[[[[0.72639324 0.71439985 0.24460189]
[0.51045154 0.22901999 0.43988897]
[0.40455139 0.75840769 0.91973927]]]]

Then, $data_{max}$ =0.91973927. If the INT8 quantization is performed, then

$$scale_{data} = \frac{data_{max}}{127} = \frac{0.91973927}{127} = 0.007242 .$$

When the quantization method with saturation and without an offset is used, a quantization threshold is introduced. Correspondingly, before the maximum value in the input data of the layer is determined, data greater than the quantization threshold in the input data of the layer is replaced with the quantization threshold. Subsequent steps are the same as those of the quantization method without saturation and without an offset, and details are not described herein again. In the quantization method without saturation, all floating point numbers in the input data can be covered by the value range of INT8. This solution ensures the data range but compromises a specific degree of accuracy. In the quantization method with saturation, a reasonable quantization threshold is selected to correspond to a largest INT8 representation range, while the accuracy and the range are considered, and a value exceeding the quantization threshold is processed in a saturation manner, that is, replaced with the quantization threshold.

When the quantization method without saturation and with an offset is used, calculating a quantization parameter of any layer includes: first determining a maximum value and a minimum value in input data of the layer; and then calculating a quantization scale value and a quantization offset value of the layer by using the following formula 2 and formula 3:

$$scale_{data} = \frac{data_{max} - data_{min}}{2^x - 1} \qquad \text{(Formula 2)}$$

$$offset = round(\frac{data_{min}}{scale_{data}}) \qquad \text{(Formula 3)}$$

where, $data_{max}$ represents the maximum value in the input data of the layer, $data_{min}$ represents the minimum value in the input data of the layer, $x$ represents a quantity of quantized bits, and the round function is used to round the data to a nearest integer.

It is assumed that the input data of the layer is data_cali_01, then $data_{max}$ =0.91973927, and $data_{min}$ =0.22901999. If the INT8 quantization is performed, then

$$scale_{data} = \frac{data_{max} - data_{min}}{n} = \frac{0.91973927 - 0.22901999}{255} = 0.002709 ;$$

$$offset = round(\frac{data_{min}}{scale_{data}}) = round(\frac{0.22901999}{0.002709}) = 84 .$$

When the quantization method with saturation and with an offset is used, before the maximum value in the input data of the layer is determined, data greater than the quantization threshold in the input data of the layer is replaced with the quantization threshold.

In this embodiment, a quantization parameter of each layer of the neural network model is calculated independently. Therefore, different quantization methods may be used for different layers, or the same quantization method may be used for different layers.

Step S503: Input to-be-quantized data into the neural network model to quantize input data of each layer by using the quantization parameter of each layer. The to-be-quantized data may be generated based on the data generated by the quantization device used by the user. However, the to-be-quantized data is different from the user calibration data. The to-be-quantized data needs to be processed by the neural network to obtain a processing result, and the user calibration data is used to generate a quantization parameter. The quantization parameter can be used to replace a default initial input quantization parameter that is set by the device manufacturer or the model provider.

In the quantization method without an offset, input data of any layer can be quantized by using formula 4:

$$data_{Int8} = round\left(\frac{data_{float}}{scale_{data}}\right) \qquad \text{(Formula 4)}$$

where, $data_{Int8}$ represents quantized input data of the layer, $data_{float}$ represents the input data of the layer, and $scale_{data}$ represents a quantization scale value of the layer.

In the quantization method with an offset, input data of any layer can be quantized by using formula 5:

$$data_{Int8} = round\left(\frac{data_{float}}{scale_{data}}\right) - offset \qquad \text{(Formula 5)}$$

It should be noted that steps 501 and 502 are performed at a quantization parameter calculation stage, and step 503 of quantizing the input data of each layer is performed at a quantization stage. The quantization parameter calculation stage and the quantization stage are two independent stages. The quantization parameter calculation stage is carried out before the quantization stage. After quantization parameter calculation is completed, a quantization process may be executed immediately, or after a period of time. The quantization parameter can be used in a plurality of quantization processes. In a life cycle of the quantization device, the quantization parameter calculation process may be executed only once, or the quantization parameter calculation may be executed a plurality of times. For example, the quantization parameter calculation process may be executed periodically (monthly, semiannually, or annually) to calibrate or update the quantization parameter. In an embodiment, the user calibration data includes at least one of first audio data or first image data obtained at the quantization parameter calculation stage, and the data is used to obtain the quantization parameter. The to-be-quantized data includes at least one of second audio data or second image data obtained at the quantization stage.

For example, the data generated by the device used by the user can be pre-stored in a memory, and when quantization parameter update time is reached or in a case of being triggered by a specific condition, the quantization parameter calculation stage can be entered to perform steps 501 and 502. Alternatively, the quantization parameter calculation stage can last for a long time, that is, whenever the user uses the device, step 501 can be performed to enter the quantization parameter calculation stage. To be specific, the user calibration data is generated based on the data generated by the device used by the user, and then is stored in the memory. When preset time is reached or in a case of being triggered by a specific condition, step 502 can be performed to further calculate the quantization parameter, and after the calculation is completed, the quantization parameter calculation stage exits, so as to wait for a subsequent quantization process.

Optionally, at the quantization stage, the quantization device can quantize the input data of each layer in real time. To-be-quantized data used for each quantization is different. When the user has related usage requirements, such as game, photographing or voice requirements, the quantization device can initiate the quantization process and perform step 503. For example, the user can trigger execution of a neural network task by performing an operation on the quantization device, to perform a quantization operation. The quantization parameter calculation stage can be periodically initiated by the quantization device or the processor 401 in the quantization device or its equivalent dedicated hardware. To avoid impact of the quantization parameter calculation process on the user's usage, the quantization device can also determine, based on a quantization period and a status of the quantization device, whether to initiate the quantization parameter calculation. Therefore, the quantization parameter calculation stage can be entered when a specific condition is met. For example, when the quantization period expires, it is determined whether the quantization device is in an unused state or in a charging state. When the quantization device is in an unused state or in a charging state, steps 501 and 502 are initiated to update or calculate the quantization parameter, so that the quantization calculation step 503 is performed subsequently when the user has a requirement. Therefore, the quantization parameter calculation stage may be triggered by the neural network, the processor 401, or the quantization device periodically or when there is no quantization task, to avoid interfering with the quantization process. That there is no quantization task may include but is not limited to that the quantization device is in an unused state or in a charging state, for example, may also include that the neural network or the processor 401 is in an idle or low power consumption state.

Further, the quantization parameter calculation stage and the quantization stage may overlap, and do not have to be two completely isolated stages. Therefore, the quantization device can execute the quantization process synchronously when updating or calculating the quantization parameter. This is not limited in this embodiment. For example, the quantization device or the processor 401 can generate a quantization parameter based on data generated by the device used by the user, and further use the quantization parameter to quantize the data. Therefore, the to-be-quantized data and the data generated by the device used by the user may be at least partly identical, or the to-be-quantized data and the user calibration data may be at least partly identical. The terms "first" and "second" mentioned in this embodiment are used to distinguish different names or features, and are not used to limit the order and specific meanings of nouns.

In this embodiment, the user calibration data is input into the neural network model. Because the user calibration data is generated based on the data generated by the device used by the user, the quantization parameter can be calculated based on the user's personalized data, so that the quantization parameter can match the user data, improving quantization accuracy. In the conventional technology, a set of common calibration data is usually used to calculate a quantization parameter of each layer. The following uses specific examples to compare quantization errors of the two.

The foregoing data_cali_01 is common calibration data used by the device manufacturer or the model provider, and the user calibration data used in this embodiment of this application is data_cali_02:

data_cali_02=[[[[0.12639324 0.11439985 -0.35539811]

[-0.08954846 -0.37098001 -0.16011103]

[-0.19544861 0.15840769 0.31973927]]]]

When the quantization method without saturation and without an offset is used, in the data_cali_02, $data_{max}$ =0.37098001, and

$$scale_{data} = \frac{data_{max}}{127} = \frac{0.37098001}{127} = 0.0029211\,;$$

$scale_{data}$ =0.0029211 is used to quantize the data_cali_02 to obtain the following quantized input data:

data_val_quant2=[[[[43. 39. -122.]

[-31. -127. -55.]

[-67. 54. 109.]]]]

When $scale_{data}$ =0.007242 is used to quantize the data_cali_01, quantized input data obtained is as follows:

data_val_quant1=[[[[17. 16. -49.]

[-13. -51. -22.]

[-27. 22. 44.]]]]

After the quantized input data is obtained, when the quantization method without an offset is used, restored data of the input data can be obtained according to the following formula 6; when the quantization method with an offset is used, the restored data of the input data can be obtained according to the following formula 7:

$$data_{float} = scale_{data} * data_{Int8} \qquad \text{(Formula 6)}$$

$$data_{float} = scale_{data} * (data_{Int8} + offset) \qquad \text{(Formula 7)}$$

The symbol * in formula 6 and formula 7 represents a multiplication operation and is used to replace the symbol "×".

When the quantization method without an offset is used, the restored data of the data_cali_01 is as follows:

data_val_quant_dequant1=[[[[0.12311471 0.11587266 -0.35486003]

[-0.09414654 -0.36934412 -0.15932491]

[-0.19553512 0.15932491 0.31864983]]]]

When the quantization method without an offset is used, the restored data of the data_cali_02 is as follows:

data_val_quant_dequant2=[[[[0.1256074 0.113923 -0.3563745]

[-0.09055418 -0.37098001 -0.16066063]

[-0.19571386 0.15773953 0.31840017]]]]

The data_cali_01 and the data_cali_02 are verified by using the following verification data data_val:

data_val=[[[[0.12539324 0.11339985 -0.35639811]

[-0.09054846 -0.37198001 -0.16111103]

[-0.19644861 0.15740769 0.31873927]]]]

The data val is user data that is generated by the quantization device being used by the user next time and that is obtained through simulation. For example, the processor or another component can use user data generated by the quantization device being used by the user recently, to obtain the data val through simulation. The data val can be used to obtain a quantization error matrix corresponding to the data_cali_01 as follows:

data_val_quant_loss1=[[[[2.27853457e-03 -2.47281394e-03 -1.53807669e-03][3.59807945e-03 - 2.63589370e-03 -1.78611709e-03]

[-9.13489606e-04 -1.91722291e-03 8.94441732e-05]]]]

A quantization error matrix corresponding to the data_cali_02 is as follows:

data_val_quant_loss2=[[[[-2.14164961e-04 -5.23145197e-04 -2.36122047e-05]

[5.71566929e-06 -1.00000000e-03 -4.50395748e-04]

[-7.34746457e-04 -3.31841811e-04 3.39103937e-04]]]]

In the foregoing quantization error matrices, e-03 represents 10^-3 (that is, 10 to the power of minus three), and xe-03 represents $x \times 10^{-3}$; similarly, e-04 represents 10 to the power of minus four, e-05 represents 10 to the power of minus five, and e-06 represents 10 to the power of minus six.

The foregoing quantization error matrices are obtained by using a difference between the verification data and the restored data. Alternatively, when the quantization error matrices are calculated, the error function loss may also be the square root of the difference between the verification data and the restored data. This is not limited in this embodiment. According to the quantization error matrices, error ratios of the two pieces of calibration data can be obtained:

$$\sum \left| loss_{data-cali-01} \right| = 0.0172$$

$$\sum \left| loss_{data-cali-02} \right| = 0.0036$$

In this embodiment, the error ratio is obtained by summing up absolute values of all pieces of data in the quantization error matrix. Based on comparison between the error ratios of the two pieces of calibration data, it can be learned that the error of using the user calibration data is reduced by 4.75 times compared with using the common calibration data.

In this embodiment, the user calibration data is obtained and input into the neural network model to calculate the quantization parameter of each of the plurality of layers of the neural network model, and the to-be-quantized data is input into the neural network model to quantize the input data of each layer by using the quantization parameter of each layer. Because the user calibration data is generated based on the data generated by the terminal device used by the user, the neural network model can be updated in the device, that is, the quantization parameter is updated online, and the quantization parameter matches the user data in the device, thereby improving quantization accuracy.

It should be noted that the foregoing solution is applicable to a process of quantizing all of the plurality of layers of the neural network model. Certainly, if only some layers in the neural network model need to be quantized, and other layers do not need to be quantized, the foregoing solution is still applicable. For each of the plurality of layers that need to be quantized in the neural network model, the foregoing solution is used for quantization. For a layer that does not need to be quantized, the foregoing solution may not be executed. Therefore, in the foregoing embodiments, the plurality of layers that perform quantization parameter calculation and quantization processing may be at least some of all the layers in the neural network.

FIG. 6 is a schematic structural diagram of an apparatus for quantizing a neural network model in a device according to a second embodiment of this application. The apparatus may be placed inside a quantization device. As shown in FIG. 6, the apparatus provided in this embodiment includes: an obtaining module 601, configured to obtain user calibration data, where the user calibration data is generated based on data generated by the device used by a user; a calculation module 602, configured to input the user calibration data into the neural network model to calculate a quantization parameter of each of a plurality of layers of the neural network model; and a quantization module 603, configured to input to-be-quantized data into the neural network model to quantize input data of each layer by using the quantization parameter of each layer.

In an example manner, the user calibration data includes at least one of first audio data or first image data; and the to-be-quantized data includes at least one of second audio data or second image data.

In an example manner, the user calibration data is obtained by screening or tailoring the data generated by the device used by the user.

In an example manner, the quantization parameter includes a quantization scale value $scale_{data}$, or includes a quantization scale value $scale_{data}$ and a quantization offset value *offset.*

In an example manner, when calculating a quantization parameter of any layer, the calculation module 602 is configured to: determine a maximum value in input data of the layer; and calculate a quantization scale value of the layer by using the following formula:

$$scale_{data} = \frac{data_{max}}{2^{x-1} - 1};$$

where, $data_{max}$ represents the maximum value in the input data of the layer, and $x$ represents a quantity of quantized bits.

In another example manner, when calculating a quantization parameter of any layer, the calculation module 602 is configured to: determine a maximum value and a minimum value in input data of the layer; and calculate a quantization scale value and a quantization offset value of the layer by using the following formulas:

$$scale_{data} = \frac{data_{max} - data_{min}}{2^x - 1};$$

$$offset = round\left(\frac{data_{min}}{scale_{data}}\right);$$

where, $data_{max}$ represents the maximum value in the input data of the layer, $data_{min}$ represents the minimum value in the input data of the layer, and $x$ represents a quantity of quantized bits.

In another example manner, the calculation module 602 is further configured to: before determining the maximum value in input data of the layer, replace data greater than a quantization threshold in the input data of the layer with the quantization threshold.

The apparatus provided in this embodiment can be configured to perform the method in the first embodiment. A specific implementation and a technical effect are similar to those of the method in the first embodiment, and details are not described herein again.

It should be noted that the quantization apparatus corresponding to FIG. 6 may be an NPU or a computing device related to a neural network model. One or more modules in the quantization apparatus can be implemented by software, hardware, or a combination of software and hardware. In other words, the neural network described in this embodiment can be implemented in a plurality of manners, which are neither limited to the solution in which the processor 401 in FIG. 4 runs a program, nor limited to the apparatus structure in FIG. 6. For example, when at least one of the plurality of modules in FIG. 6 can be implemented by software, each module may include a large quantity of program instructions or code. The instructions are stored in the memory 402 in FIG. 4 and are to be executed by at least one processing unit or core such as an NPU in the processor 401 in FIG. 4. When a module is implemented by hardware, the module may include various circuits, such as the processor 401 in FIG. 4 or other processing circuits, such as a neural network circuit, a hardware acceleration circuit, an ASIC, an FPGA or another programmable logic device, a transistor logic device, and another hardware component.

If the modules or method steps in this embodiment are implemented in a form of a software function unit and sold or used as an independent product, the functions may be stored in a computer-readable storage medium. Based on such an understanding, at least a part of the technical solutions of this application may be implemented in a form of a software product. The computer software product is stored in a storage medium, for example, the memory 402 mentioned in the foregoing embodiments. The storage medium includes several instructions for instructing a computer device (which may be a personal computer, a server, a device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for quantizing a neural network model in a device, comprising:

    obtaining user calibration data, wherein the user calibration data is generated based on data generated by the device used by a user;
    inputting the user calibration data into the neural network model to calculate a quantization parameter of each of a plurality of layers of the neural network model; and
    inputting to-be-quantized data into the neural network model to quantize input data of each layer by using the quantization parameter of each layer.

2. The method according to claim 1, wherein obtaining the user calibration data and calculating the quantization parameter are performed at a quantization parameter calculation stage; and
    quantizing input data of each layer is performed at a quantization stage.

3. The method according to claim 1 or 2, wherein the user calibration data comprises at least one of first audio data or first image data; and
the to-be-quantized data comprises at least one of second audio data or second image data.

4. The method according to any one of claims 1 to 3, wherein the user calibration data is obtained by screening or tailoring the data generated by the device used by the user.

5. The method according to any one of claims 1 to 4, wherein the quantization parameter comprises a quantization scale value $scale_{data}$.

6. The method according to claim 5, wherein the quantization parameter further comprises a quantization offset value $offset$.

7. The method according to claim 5, wherein calculating a quantization parameter of any layer comprises:

   determining a maximum value in input data of the layer; and
   calculating a quantization scale value of the layer by using the following formula:

$$scale_{data} = \frac{data_{max}}{2^{x-1} - 1},$$

   wherein
   $data_{max}$ represents the maximum value in the input data of the layer, and $x$ represents a quantity of quantized bits.

8. The method according to claim 6, wherein calculating a quantization parameter of any layer comprises:

   determining a maximum value and a minimum value in input data of the layer; and
   calculating a quantization scale value and a quantization offset value of the layer by using the following formulas:

$$scale_{data} = \frac{data_{max} - data_{min}}{2^{x} - 1};$$

   and

$$offset = round\left(\frac{data_{min}}{scale_{data}}\right),$$

   wherein
   $data_{max}$ represents the maximum value in the input data of the layer, $data_{min}$ represents the minimum value in the input data of the layer, and $x$ represents a quantity of quantized bits.

9. The method according to claim 7 or 8, wherein before determining the maximum value in input data of the layer, the method further comprises:
   replacing a value greater than a quantization threshold in the input data of the layer with the quantization threshold.

10. An apparatus for quantizing a neural network model in a device, comprising:

    an obtaining module, configured to obtain user calibration data, wherein the user calibration data is generated based on data generated by the device used by a user;
    a calculation module, configured to input the user calibration data into the neural network model to calculate a quantization parameter of each of a plurality of layers of the neural network model; and
    a quantization module, configured to input to-be-quantized data into the neural network model to quantize input data of each layer by using the quantization parameter of each layer.

11. The apparatus according to claim 10, wherein obtaining the user calibration data and calculating the quantization parameter are performed at a quantization parameter calculation stage; and
quantizing the input data of each layer is performed at a quantization stage.

12. The apparatus according to claim 10 or 11, wherein the user calibration data comprises at least one of first audio data or first image data; and
the to-be-quantized data comprises at least one of second audio data or second image data.

13. The apparatus according to any one of claims 10 to 12, wherein the user calibration data is obtained by screening or tailoring the data generated by the device used by the user.

14. The apparatus according to any one of claims 10 to 13, wherein the quantization parameter comprises a quantization scale value $scale_{data}$.

15. The apparatus according to claim 14, wherein the quantization parameter further comprises a quantization offset value $offset$.

16. The apparatus according to claim 14 or 15, wherein when calculating a quantization parameter of any layer, the calculation module is configured to:

determine a maximum value in input data of the layer; and
calculate a quantization scale value of the layer by using the following formula:

$$scale_{data} = \frac{data_{max}}{2^{x-1} - 1},$$

wherein
$data_{max}$ represents the maximum value in the input data of the layer, and $x$ represents a quantity of quantized bits.

17. The apparatus according to claim 15, wherein when calculating a quantization parameter of any layer, the calculation module is configured to:

determine a maximum value and a minimum value in input data of the layer; and
calculate a quantization scale value and a quantization offset value of the layer by using the following formulas:

$$scale_{data} = \frac{data_{max} - data_{min}}{2^{x} - 1};$$

and

$$offset = round\left(\frac{data_{min}}{scale_{data}}\right),$$

wherein
$data_{max}$ represents the maximum value in the input data of the layer, $data_{min}$ represents the minimum value in the input data of the layer, and $x$ represents a quantity of quantized bits.

18. The apparatus according to claim 17, wherein the calculation module is further configured to:
before determining the maximum value in the input data of the layer, replace a value greater than a quantization threshold in the input data of the layer with the quantization threshold.

FIG. 1

FIG. 2

FIG. 3

FIG. 4

Obtain user calibration data, where the user calibration data is generated based on data generated by a terminal device used by a user    S501

Input the user calibration data into a neural network model and calculate a quantization parameter of each of a plurality of layers of the neural network model    S502

Input to-be-quantized data into the neural network model to quantize input data of each layer by using the quantization parameter of each layer    S503

FIG. 5

Obtaining module    601

Calculation module    602

Quantization module    603

FIG. 6

## INTERNATIONAL SEARCH REPORT

| | International application No. |
|---|---|
| | **PCT/CN2018/106919** |

| **A.** | **CLASSIFICATION OF SUBJECT MATTER** |
|---|---|
| | G06N 3/08(2006.01)i; G06K 9/62(2006.01)i |

According to International Patent Classification (IPC) or to both national classification and IPC

| **B.** | **FIELDS SEARCHED** |
|---|---|

Minimum documentation searched (classification system followed by classification symbols)

G06N; G06K

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 用户, 校准, 神经网络, 数据, 量化, 参数, user, calibration, data, neural, network, CNN, parameter, quantization

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | CN 107256422 A (SHANGHAI ZHAOXIN SEMICONDUCTOR CO., LTD.) 17 October 2017 (2017-10-17) claims 1-20 | 1-6, 10-15 |
| A | CN 107688855 A (BEIJING DEEPHI INTELLIGENCE TECHNOLOGY CO., LTD.) 13 February 2018 (2018-02-13) entire document | 1-18 |
| A | CN 106485316 A (BEIJING BAIDU NETWORK TECHNOLOGY CO., LTD.) 08 March 2017 (2017-03-08) entire document | 1-18 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 May 2019** | **29 May 2019** |

| Name and mailing address of the ISA/CN | Authorized officer |
|---|---|
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/106919**

| Patent document cited in search report | | | Publication date (day/month/year) | Patent family member(s) | | | Publication date (day/month/year) |
|---|---|---|---|---|---|---|---|
| CN | 107256422 | A | 17 October 2017 | US | 2018350109 | A1 | 06 December 2018 |
| CN | 107688855 | A | 13 February 2018 | CN | 107657316 | A | 02 February 2018 |
| CN | 106485316 | A | 08 March 2017 | None | | | |

Form PCT/ISA/210 (patent family annex) (January 2015)